(19) Europäisches Patentamt / European Patent Office / Office européen des brevets

(11) **EP 2 000 300 A1**

(12) **EUROPEAN PATENT APPLICATION**
published in accordance with Art. 153(4) EPC

(43) Date of publication:
**10.12.2008 Bulletin 2008/50**

(51) Int Cl.:
**B32B 9/00** $^{(2006.01)}$    **B65D 65/40** $^{(2006.01)}$
**B65D 81/24** $^{(2006.01)}$    **C23C 14/06** $^{(2006.01)}$

(21) Application number: **07737927.9**

(22) Date of filing: **07.03.2007**

(86) International application number:
**PCT/JP2007/054413**

(87) International publication number:
**WO 2007/111098 (04.10.2007 Gazette 2007/40)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.03.2006 JP 2006082439**

(71) Applicant: **Konica Minolta Medical & Graphic, Inc.**
**Hino-shi,**
**Tokyo 191-8511 (JP)**

(72) Inventor: **TAKEYAMA, Toshihisa**
**Tokyo 1630512 (JP)**

(74) Representative: **Henkel, Feiler & Hänzel**
**Patentanwälte**
**Maximiliansplatz 21**
**80333 München (DE)**

(54) **TRANSPARENT BARRIER SHEET AND METHOD FOR PRODUCING SAME**

(57) Disclosed is an optimum transparent barrier sheet securing a desired gas barrier performance and exhibiting high gas barrier performance even under high temperature, high humidity conditions. This transparent barrier sheet has such a transparency that enables to see an object wrapped therein from the outside, and a metal detector can be used for detecting the object wrapped in this transparent barrier sheet. Furthermore, curling does not occur in this transparent barrier sheet. Also disclosed is a method for producing such a transparent barrier sheet. Specifically disclosed is a transparent barrier sheet wherein a transparent primer layer is arranged on a base sheet, and at least a transparent inorganic thin film layer and a transparent organic thin film layer are arranged in this order on the transparent primer layer. This transparent barrier sheet is **characterized in that** the relation represented by the formula (1) below is satisfied with the surface roughness Ra of the transparent primer layer being Ra1, and the surface roughness Ra of the transparent organic thin film layer serving as the outermost layer being Ra3.

$$\text{Formula (1):}\ 10 \leq Ra3 \times 100/Ra1 < 60$$

EP 2 000 300 A1

**Description**

**FIELD OF THE INVENTION**

The present invention relates to a transparent packaging barrier sheet used for packaging in the field of foods and medicines or a transparent barrier sheet for use in electronic instrument-related components, and in particular to a transparent barrier sheet exhibiting extremely low permeability of gas such as oxygen or water vapor and a method for producing the same.

**BACKGROUND OF THE INVENTION**

Recently, packaging materials used for packaging foods or medicines require transparency for confirmation of contents and gas-barrier capability to inhibit adverse influences due to gases deteriorating contents, such as permeated oxygen, water vapor or the like. There were employed packaging materials using, as a gas-barrier layer, a metal foil composed of metals such as aluminum or the like when relatively high gas barrier ability was required. However, such packaging materials using a metal foil as a gas-barrier layer, which exhibit enhanced gas barrier capability and are barely affected by temperature or humidity, have several disadvantages such that the contents cannot be viewed through the packaging material and a metal detector cannot be employed for inspection of the contents, arising in problems.

Recently, there have been developed barrier materials exhibiting enhanced performance, for instance, a transparent barrier material provided, on a plastic film, with a deposited metal oxide film such as silicon oxide or aluminum oxide. However, when increasing the layer thickness to achieve enhanced gas barrier capability, such inorganic transparent layer often cracks due to inadequate pliability or flexibility, leading to lowering or failure of gas barrier capability. To overcome the foregoing problems, there was proposed coating of an organic layer of a curing structure and an inorganic layer on the surface of a transparent plastic resin substrate, whereby enhanced gas barrier capability was realized, as described in patent documents 1 and 2.

To utilize a metal deposit layer for magnetic recording, there was proposed composite film used for magnetic recording media, as described in, for example, patent documents 3 and 4 In the foregoing transparent barrier sheet, the inorganic layer plays a role as a gas barrier. To minimize defects of the inorganic layer surface, there was proposed a primer layer provided on the substrate sheet exhibiting superior surface smoothness, as described in, for example, patent documents 5 and 6. However, it was further proved that even if the surface on which an inorganic layer is provided is smoothed, surface properties due to defects of the inorganic layer were not overcome and sufficient barrier capability was not achieved by an organic layer provided on the inorganic layer.

Patent document 1: JP-A 2003-276115
Patent document 2: JP-A 2003-300273
Patent document 3: JP-A 2002-25043
Patent document 4: JP-A 2003-341003
Patent document 5: JP-A 2003-276115
Patent document 6: JP-A 2002-50027

**DISCLOSURE OF THE INVENTION**

**PROBLEM TO BE SOLVED**

The present invention has come into being in light of the foregoing concerns. Thus, it is an object of the invention to provide an optimum transparent barrier sheet which attains the intended gas barrier capability, maintains transparency enabling through-vision of contents after they are packaged, enables use of a metal detector for inspection of contents, causes no curling and exhibits enhanced gas barrier capability and results in minimal deterioration of gas barrier capability.

**MEANS FOR SOLVING THE PROBLEM**

The foregoing problems can be dissolved by the following constitution.

1. A transparent barrier sheet comprising a substrate sheet having on at least one side of the substrate sheet a primer layer and further on the primer layer at least one transparent inorganic layer and at least one transparent organic layer in the order set forth, wherein the following requirement (1) is satisfied:

requirement (1)

$$10 \leq Ra3 \times 100/Ra1 < 60 \qquad (1)$$

wherein Ra1 is a surface roughness Ra of the primer layer and Ra3 is a surface roughness Ra of the transparent organic layer as the outermost layer.

2. The transparent barrier sheet as described in the foregoing 1, wherein the primer layer exhibits a surface roughness Ra 1 of not more than 10 nm.

3. The transparent barrier sheet as described in the foregoing 1 or 2, wherein when a unit comprises a transparent inorganic layer and a transparent organic layer, at least two units are provided on the substrate and the barrier sheet meets the requirement (1).

4. The transparent barrier sheet as described in any one of the foregoing 1 to 3, wherein the transparent inorganic layer comprises a metal oxide or a metal nitride.

5. The transparent barrier sheet as described in any one of the foregoing 1 to 4, wherein the transparent organic layer is comprised of an organic layer formed by polymerization of an organic monomer.

6. A method for producing a transparent barrier sheet as described in any one of the foregoing 1 to 5, the method comprising forming a transparent inorganic layer and a transparent organic layer on a substrate sheet, wherein a maximum temperature of the substrate sheet falls within the range of 243 K to 383 K.

7. The method as described in the foregoing 6, wherein the requirement (2) is satisfied:

$$1.21 \leq (TxS)/1000 \leq 460 \qquad (2)$$

wherein T is a maximum temperature (K) of the substrate sheet at the time when forming the transparent inorganic layer and the transparent organic layer and S is a time (sec) to form the inorganic compound or the organic compound.

8. The method as described in the foregoing 6 or 7, wherein the transparent organic layer is formed by vapor-depositing an organic monomer to form a monomer layer, followed by subjecting the monomer layer to an actinic energy ray exposure or to a heat treatment to polymerize the monomer layer.

9. The method as described in any one of the foregoing 6 to 8, wherein a transparent inorganic layer is formed by depositing an inorganic compound by a process of at least one selected from catalytic chemical vapor deposition, reaction plasma deposition and electron cyclotron resonance plasma deposition.

## EFFECT OF THE INVENTION

According to the invention, there can be provided an optimum transparent barrier sheet which attains the intended gas barrier capability, maintains transparency enabling through-vision of contents after they are packaged, enables use of a metal detector for inspection of contents, causes no curling and exhibits enhanced gas barrier capability and results in minimal deterioration of gas barrier capability.

## BRIEF DESCRIPTION OF THE DRAWINGS

FIGS. 1 illustrate a sectional view of a transparent barrier sheet of the invention.
FIGS. 2 illustrate a sectional view of a transparent barrier sheet of the invention.
FIGS. 3 illustrate a sectional view of a transparent barrier sheet of the invention.
FIGS. 4 illustrate a sectional view of a transparent barrier sheet of the invention.

## DESCRIPTION OF DESIGNATION

1, 21, 31, 41: Substrate sheet
22, 32, 42, 42': Transparent primer sheet
111, 211, 311, 321, 411, 421, 411', 421': Transparent inorganic
112, 212, 312, 412, 422, 412', 422': Transparent organic layer

**PREFERRED EMBODIMENTS OF THE INVENTION**

In the following, there will be described a transparent barrier sheet of the invention and a preparation method thereof.

Transparent barrier sheet:

In one aspect of the invention, a transparent barrier sheet comprises a substrate sheet having thereon a transparent primer layer and further thereon a transparent inorganic layer and a transparent organic layer as being the outermost layer and the barrier sheet meets the expression (1) described below, in which Ra1 is a surface roughness Ra of the transparent primer layer and Ra3 is a surface roughness Ra of the transparent organic layer as the outermost layer.

$$10 \leq Ra3 \times 100/Ra1 < 60 \tag{1}$$

The surface roughness Ra is obtained when the surface roughness is measured at plural sites (at least five sites) within an area of 200 $\mu$m x 200 $\mu$m by using a noncontact 3D surface measuring instrument. The expression, transparent means that the visible light transmittance is not less than 50% and not more than 95%.

The surface roughness Ra refers to the average surface roughness value (arithmetic average surface roughness), which may also be denoted as a roughness average. The surface roughness Ra, which is a three-dimensional Ra, is defined by the following formula:

$$Ra = \frac{1}{MN} \sum_{k=1}^{M} \sum_{j=1}^{N} \left| f(Z_{jk}) \right|$$

where M and N are the number of data points in directions X and Y, respectively, and direction $Z_{jk}$ is the surface height relative to the mean plane. Thus, heights are measured at (M x N) points within a specific measured length, i.e., M points in the X direction and N points in the Y direction and a roughness surface is determined, in which $Z_{jk}$ represents a height at the point corresponding to the j-th point in the X direction and the k-th point in the Y direction.

The surface roughness Ra may also be calculated per the ANSI B46.1 standard or JIS-B-0601.

The surface roughness Ra is obtained when the surface roughness is measured at plural sites (at least five sites) within an area of 200 $\mu$m x 200 $\mu$m by using a noncontact 3D surface measuring instrument (e.g., WYKO NT1100, produced by Veeco).

There will be the surface roughness Ra defined in the expression (1).

Since the outermost layer is in contact with gases such as water vapor or oxygen gas, the smallest area in contact with such gases is desirable with respect to barrier capability. When providing a transparent inorganic layer on a substrate sheet or a primer layer, the surface roughness Ra of the inorganic layer is often affected by that of the substrate sheet or the primer layer. A thicker inorganic layer is less affected. However, increased thickness often results in cracking of the inorganic layer when bending the transparent barrier sheet, for which reason the inorganic layer is generally made as thin as possible. In such cases, a transparent inorganic layer which exhibits a surface roughness Ra substantially equivalent to that of the substrate sheet or the primer layer is formed, which does not result in reduction of the surface area in contact with gases. Accordingly, in order to reduce the surface area or protect the transparent inorganic layer, a transparent organic layer is provided on the transparent inorganic layer. The surface roughness Ra of the thus provided transparent organic layer depends on the composition thereof. If the composition is one which achieves sufficient leveling at the time of layer formation, an increased thickness reduces the surface roughness Ra, leading to a reduced surface area. Such a composition capable of sufficient leveling at the time of layer formation includes a thermally fusible compound maintained at a temperature higher than its melting point and a polymer film formed by polymerizing a monomer through post-processing. Providing a transparent layer with a polymer layer formed by polymerizing a monomer through post-processing is preferred in terms of layer strength. Formation of a polymer layer by polymerizing a monomer through post-processing often results in reduction of volume between before and after the post-processing, while an excessive thickness also causes deformation, such as curling of the transparent barrier sheet.

In the transparent barrier sheet of the invention, comprising a substrate sheet provided thereon with a transparent inorganic layer and a transparent organic layer, therefore, the respective layers are made to be as thin as possible to prevent deformation such as curling. Thus, satisfying above-described expressions (1) or (2) regarding surface roughness Ra makes it possible to reduce surface area, while preventing curling of the transparent barrier sheet.

A formed layer exhibiting a reduced surface roughness R results in a reduced surface area, in other words, enhanced barrier capability. In the invention, the surface roughness Ra of a substrate sheet is preferably not more than 20 nm when a transparent inorganic layer is provided directly on the substrate sheet. When providing a primer layer to enhance adhesion between a substrate sheet and a transparent inorganic layer or to make smooth as possible the surface of the transparent inorganic layer, the surface roughness Ra of the primer layer is preferably not more than 10 nm.

Next, there will be described component members of the transparent barrier sheet meeting the relationship of the invention, regarding surface roughness Ra.

A substrate sheet used in the invention preferably exhibits a surface roughness Ra of not more than 20 nm to achieve uniformity of a transparent inorganic layer and reduction of a surface area of the outermost layer.

The substrate sheet used in the invention is not specifically limited and can employ any material not causing dimensional deformation in the preparation method described later or curling after layer formation. Examples of resin to form a sheet include a polyester resin such as polyethylene terephthalate (PET) and polyethylene naphthalate, a polyolefin resin such as polyethylene and polypropylene, styrene resin such as polystyrene and acrylonitrile-styrene copolymer, an acryl resin such as polymethyl methacrylate and methacrylic acid-maleic acid copolymer, a cellulose resin such as triacetyl cellulose, a vinyl chloride resin such as polyvinyl chloride, imide resin such as polyimide, fluorinated polyimide and polyether-imide, an amide resin such as Nylon 6, Nylon 66 and MXD Nylon 6, a polycarbonate resin formed of bisphenol A, bisphenol Z or 1,1-bis(4-hydroxyphenyl)-3,3,5-trimethylcyclohexane, a fluororesin, a polyacrylate resin, a polyethersufone resin, polysulfone resin, polyetherketone resin, and alicyclic type polyolefin resin such as a copolymer of alicyclic olefins.

A substrate sheet usable in the invention may be stretched or unstretched within a range of surface roughness Ra and unless hindering the object of the invention, and one which is superior in mechanical strength or dimensional stability is preferred. Of these, biaxially stretched polyethylene terephthalate or polyethylene naphthalate is preferred for use in thin substrate sheets. In the case of a relatively thick substrate sheet, a polyester resin such as polyethylene terephthalate or polyethylene naphthalate, a polyacrylate resin, a polyethersulfone resin, polycarbonate resin or an alicyclic polyolefin resin is preferred in terms of dimensional stability and heat resistance.

Onto the substrate sheet of the invention may be incorporated various additives within the range of not hindering effects of the invention. Examples of such additives include a plasticizer, a dye or pigment, an antistatic agent, a UV absorber, an antioxidant, inorganic microparticles, an anti-peeling agent, a leveling agent, an inorganic lamellar silicate compound and a lubricant.

The thickness of a substrate sheet can appropriately be chosen according to the use of the transparent barrier sheet of the invention. Taking into account capability as a packaging material, there can optionally be used not only a single resin sheet but also a layered sheet composed of combined sheets differing in quality. Further, taking into account processability in formation of a transparent inorganic layer or a transparent organic layer, the substrate thickness is preferably from 6 to 400 nm in practical use, and more preferably from 25 to 100 nm. In the case of the use for electronic devices such as a liquid crystal display element, a dye type solar battery, an organic or inorganic EL, electronic paper and a fuel cell, the substrate thickness is appropriately chosen according to the use thereof. In the case of the use instead of a glass substrate, for instance, a thickness of 50 to 800 $\mu$m is preferred to fit the subsequent preparation process of glass substrate specification, and a thickness of 50 to 400 $\mu$m is more preferred.

When taking into account mass production of the transparent barrier sheet of the invention, a continuous long length of film is preferred to enable continuous formation of a transparent inorganic layer and a transparent organic layer on a substrate sheet.

Formation of the substrate sheet described above can be achieved by means known in the art, for example, with reference to sheets or film described in JP-A Nos. 5-212788, 6-335963, 7-44856, 7-272249, 8-212536, 11-181111, 11-286093, 11-314333, 2000-11364, 2000-219752, 2001-1460, 2001-243658, 2002-140811, 2002-160337, 2002-248726, 2003-300270, 2004-346373 and 2005-324373.

Next, there will be described a transparent primer layer provided for the purpose of enhancement of adhesion between a transparent inorganic layer and a substrate sheet and reduction of the surface area of the outermost layer. The transparent primer layer preferably exhibits a surface roughness Ra of not more than 10 nm to reduce the surface area of the outermost layer.

A transparent primer layer can be formed by coating a solution of resin dissolved in solvents, followed by drying. After being dried, a curing reaction may be undergone. Alternatively, a metal alkoxide, a ultraviolet curing resin, an electron beam curing resin, a thermo-setting resin or the like is provided without using any solvent, or a transparent primer layer forming composition which also uses no solvent is diluted with a solvent and coated, followed by being dried and cured.

Examples of a resin used for the resin coating solution described above include a polyester resin a polyurethane resin, an acryl resin, a polystyrene resin, polystyrene resin, a cellulose resin, polyvinyl acetal resin, and polyvinyl chloride resin, and these resins are appropriately chosen and used. A metal alkoxide includes one obtained from metals such as silicon, titanium and zirconium, and alcohols such as methyl alcohol, ethyl alcohol and isopropyl alcohol. As an electron beam curing resin or a ultraviolet curing resin, compounds containing an unsaturated double bond within the molecule such as a styrene monomer or a (meth)acryl monomer are used alone or in combination with a radical-polymerizable compound, an anionic-polymerizable compound, a cationic-polymerizable monomer or a compound containing a copolymerizable functional group used for formation of a transparent organic layer, as described later. Such a composition as described above is coated on a substrate sheet and cured to form a transparent primer layer. A thermosetting resin is also usable. Examples of such a thermosetting resin include commonly known thermo-setting resins such as a phenol resin, an epoxy resin, a melamine resin, a urea resin, unsaturated polyester and alkyd resin, and a combination of compounds or resins containing an epoxy group and a mercapto group, a combination of compounds or resins containing an epoxy group and an amino group, a combination of an acid anhydride and a compound or resins containing an amino group, and a combination of compounds or resins containing a hydroxyl group and an isocyanate group.

The thickness of a transparent primer layer, depending on surface properties of the used substrate sheet, is preferably from 0.05 to 5.0 $\mu$m, and more preferably from 0.1 to 2.0 $\mu$m. The transparent primer layer may be formed of a single layer or plural layers.

The transparent primer layer described above can be achieved by commonly known means, for instance, with reference to primer layers described in JP-A Nos. 11-216827, 11-322975, 2001-167426, 2002-18946, 2002-25043, 2002-50027, 2003-136656, 2003-276115, 2003-341003, 2004-42528, 2004-71117, 2004-142236, 2004-149551, 2004-174713 and 2005-174508; and Japanese translation of PCT international patent application No. 4-502479.

Next, there will be described a transparent inorganic layer and a transparent organic layer, provided on a transparent primer layer which is provided on a substrate sheet.

Any transparent metal oxide or metal nitride exhibiting barrier capability can be used as a transparent inorganic layer. Specifically, as a metal oxide or a metal nitride forming a transparent inorganic layer is used an oxide or nitride containing at least one appropriately chosen from Si, Al, In, Sn, Zn, Mg, Ca, K, Sn, Na, B, Ti, Pb, Zr, Y, In, Ce, and Ta. Of these, one which does not exhibit a definite absorption peak in the visible region is preferred for the purpose of confirmation of contents or for use in an electronic device.

Of the foregoing are usable oxides of metals such as Silicon (Si), aluminum (Al), zinc (Zn), magnesium (Mg), calcium (Ca), potassium (K), tin (Sn), sodium (Na), boron (B), titanium (Ti), lead (Pb), zirconium (Zr), yttrium (Y) and indium (In). Rotation of a metal oxide is represented in terms of $MO_x$, for example, $SiO_x$, $AlO_x$ and $MgO_x$ (in which M represents a metal element and a value of x falls within a range depending on a metal element). As the range of a x-value, for example, silicon (Si) is $0<x\leq2$, aluminum (Al) is $0<x\leq1.5$, zinc (Zn) is $0<x\leq1$, magnesium (Mg) is $0<x\leq1$, calcium (Ca) is $0<x\leq1$, potassium (K) is $0<x\leq0.5$, tin (Sn) is $0<x\leq2$, sodium (Na) is $0<x\leq0.5$, boron (B) is $0<x\leq1.5$, titanium (Ti) is $0<x\leq2$, lead (Pb) is $0<x\leq1$, zirconium (Zr) is $0<x\leq2$, yttrium (Y) is $0<x\leq1.5$, and indium (In) is $0<x\leq1$. In the invention, an oxide of silicon (Si) or aluminum (Al) is preferred in terms of barrier capability. Silicon oxide ($SiO_2$) is preferably in the range of $1.0\leq x\leq2.0$ and aluminum oxide ($Al_2O_3$) is preferably in the range of $0.5\leq x\leq1.5$.

Of inorganic nitrides, silicon nitride is preferred in terms of transparency and as its mixture, silicon oxynitride is preferred. silicon oxynitride is represented as $SiO_xN_y$ and the ratio of x to y is preferably $1<x<2$ and $0<y<1$ as oxygen-rich membrane when attaching importance to enhancement of adhesion and is also preferably $0<x<0.8$ and $0.8<y<1.3$ when attaching importance to enhancement of barrier to water vapor.

The thickness of a transparent inorganic layer is preferably not less than 10 nm and not more than 1000 nm, and more preferably not less than 20 nm and not more than 500 nm.

Next, there will be described a transparent organic layer.

The transparent organic layer of the invention is preferably a polymer layer. The transparent organic layer of the invention can employ any polymer layer formed by polymerization of a polymerizable monomer. Such a monomer is preferably one capable of leveling when provided on the transparent inorganic layer and polymerizing at a temperature lower than that of causing deformation of the substrate sheet. Preferred monomers include a radical-polymerizable compound and a cationic-polymerizable compound.

Any compound containing a functional group capable of performing radical polymerization is usable as such a radical-polymerizable compound but a compound having an ethylenically unsaturated bond or double bond (which is also denoted as an ethylenically unsaturated compound) is preferred in terms of availability.

Examples of such an ethylenically unsaturated compound include a compound containing a vinyl group in the molecule, such as styrene derivatives, vinyl acetate derivatives and vinyl pyrrolidone derivatives, a compound containing a (meth)acryloyl group in the molecule, and a compound containing an acyloxy group or an acylamido group. Of these, a compound containing a (meth)acryloyl group in the molecule is preferred in terms of steric hindrance in radical polymerization. In the invention, the (meth)acryloyl group refers to an acryloyl group or a methacryloyl group.

Examples of a compound containing one (meth)acryloyl group include a (meth)acrylate or (meth)acrylamide of a substituted or unsubstituted phenol, nonylphenol or 2-ethylhexanol and their adducts with alkylene oxide. Examples of a compound containing two (meth)acryloyl groups include a di-(meth)acrylate or di-(meth)acrylamide of a substituted or unsubstituted bisphenol A, bisphenol F, fluorene or isocyanuric acid and their adducts with alkylene oxide, and di-(meth)acrylate or di-(meth)acrylamide of a polyalkylene glycol such as ethylene glycol or propylene glycol. Examples of a compound containing three (meth)acryloyl group include tri-(meth)acrylate or tri-(meth)acrylamide of pentaerythritol, trimethylolpropane or isocyanuric acid, and their adducts with alkylene oxide. Examples of a compound containing four or more (meth)acryloyl groups include a poly-(meth)acrylate or poly-(meth)acrylamide of pentaerythritol or dipentaerythritol. There are also cited (meth)acryl or (rneth)aorylamide, such as a urethane acrylate having a urethane bond skeleton, a polyester acrylate having a ester bond skeleton and epoxy(methlacrylate in which an epoxy compound is added with (meth)acrylic acid. Further, there are also chosen compounds described in JP-A Nos. 9-104085, 2000-122005, 2000-216049, 2003-172935, 2003-233076, 2003-276115, 2003-322859, 2004-1296, 2004-359899 and 2004-103401; Japanese translation of PCT international patent application Nos. 8-512256, 11-503195, 2001-508089, 2001-518561, 2002-528568, 2004-532330, 2004-533313 and 2005-524058.

A compound containing plural (meth)acryloyl group may one containing plural (meth)acrylates, one containing plural (meth)acrylamides or one containing at least one (meth)acrylate and at least one (meth)acrylamide.

The foregoing radical-polymerizable compounds can be polymerized by commonly known methods such as electron beam curing or ultraviolet curing. A polymerization initiator to initiate polymerization is an essential component in polymerization of a radical-polymerizable compound through photopolymerization using ultraviolet rays or visible light. Polymerization initiators used for ultraviolet rays or visible light include ones capable of producing a radical upon exposure to ultraviolet rays or visible light. Specific examples thereof include carbonyl compounds such as benzoin or its derivative and benzophenone, an azo compound such as azobisisobutyronitrile, a sulfur compound such as dibenzothiazolyl sulfide, a peroxide such as benzoyl peroxide, a halogen compound such as 2-tribromomethanesulfonyl-pyridine, an onium compound such as a quaternary ammonium salt, a substituted or unsubstituted diphenyliodonium salt or a triphenylphosphonium salt, and a metal $\pi$-complex such as iron arene complex or titanocene complex. In cases when subjected to holographic exposure and a photopolymerization initiator used therein exhibits no absorption with respect to a laser light source used for holographic exposure, a sensitizing dye may be used in combination with the initiator to spectrally sensitize a photopolymerization initiator.

A cation-polymerizable compound used in the transparent organic layer of the invention is preferably chosen from compounds containing an oxirane group, oxetanyl group, a tetrahydrofuran group, oxepane group, a monocyclic acetal group, a bicyclic acetal group, a alkenyl ether group, an allene ether group, ketene acetal group, lactone group, a cyclic orthoester group or a cyclic carbonato group.

Compounds containing oxetanyl group include, for example, those described in JP-A Nos. 5-170763, 5-371224, 6-16804, 7-17958, 7-173279, 8-245783, 8-301859, 10-237056, 10-330485, 11-106380, 11-130766, 11-228558, 11-246510, 11-246540, 11-246541, 11-322735, 2000-1482, 2000-26546, 2000-191652, 2000-302774, 2000-336133, 2001-31664, 2001-31665, 2001-31666, 2001-40085, 2003-81958, 2003-89693, 2001-163882, 2001-226365, 2001-278874, 2001-278875, 2001-302651, 2001-342194, 2002-20376, 2002-80581, 2002-193965, 2002-241489, 2002-275171, 2002-275172, 2002-322268, 2003-2881, 2003-12662, 2003-81958, 2004-91347, 2004-149486, 2004-262817, 2005-125731, 2005-171122, 2005-238446, 2005-239573, 2005-336349, and Japanese translation of PCT international patent application No. 11-500422. These compounds may be used singly or in combination.

There are usable a variety of compounds containing oxirane group. Specific examples thereof include an aliphatic polyglycidyl ether, polyalkylene glycol diglycidyl ether, a tertiary carboxylic acid monoglycidyl ether, a resin modified with a glycidyl group at the endo-position such as a polycondensate of bisphenol A and epichlorohydrin and a polycondensate of brominated bisphenol A and epichlorohydrin, a glycidyl-modified phenol novolac resin, 3,4-epoxycyclohexenylmethyl-3',4'-epoxycyclohexenecarboxylate, 3,4-epoxy-4-methylcyclohexenylmethyl-3',4'-epoxy-4'-methylcyclohexenecarboxylate, 1,2-bis(3,4-epoxy-4-methylcyclohexenylcarbonyloxy)ethane and dipentene oxide. In addition, there are also usable compounds described in "11290 chemical goods" (Kagakukogyo Nippo-sha) page 778-787, and JP-A 2003-341003. Such compounds containing oxirane group may be used singly or in combination.

Examples of a compound containing an alkenyl ether group include hydroxyethyl vinyl ether, hydroxybutyl vinyl ether, dodecyl vinyl ether, propenyl ether propylene carbonate, and cyclohexyl vinyl ether. Examples of a compound containing at least two vinyl ether groups include cyclohexanedimethanol divinyl ether, triethylene glycol divinyl ether and novolac type divinyl ether. Specific examples of compounds containing tetrahydrofuran group, oxepane group, a monocyclic acetal group, a bicyclic acetal group, a alkenyl ether group, an allene ether group, ketene acetal group, lactone group, a cyclic orthoester group or a cyclic carbonato group include those described in JP-A No. 2004-341016.

Polymerization initiators to polymerize a cationic-polymerizable compound include a photopolymerization initiator and a thermal polymerization initiator. Compounds capable of generating a Brφnsted cid or a Lewis acid are usable as a photopolymerization initiator. For example, a photo-cationic-polymerization initiator used in a chemical amplification type photoresist or a resin for use in laser beam lithography ("Organic Material used for Imaging" edited by Organic Electronics Material Study Group, Bunshin Shuppan (1993) page 187-192) are appropriately chosen and usable.

Specific examples of a photo-cationic-polymerization initiator include a trihalomethyl group-substituted s-triazine compound such as 2,4,6-tris(trichloromethyl)-1,3,5-triazine, 2-(4-methoxyphenyl)-4,6-bis(trichloromethyl)-1,3,5-triazine and compound described in JP-A No. 2-306247; an iron arene complex such as [η6-1-propylbenzene] or [η5-cyclopentadienyl]iron hexafluorophosphate; an onium salt such as diphenyliodonium hexafluorophosphate, diphenyliodonium hexafluoroantimonate, triphenylsulfonium hexafluorophosphate, triphenyltelluronium hexafluoroarsenatediphenyl-4-thiophenoxysulfonium hexafluoroantimonate; and an aryldiazonium salt described in JP-A No. 62-57646, a diketone, o-nitrobenzyl ester, a sulfonic acid ester, disulfone derivatives, imidosulfonate derivatives and a silanol-aluminum complex; and those described in JP-A Nos. 5-107999, 5-181271, 8-16080, 8-305262, 2000-47552 and 2003-66816, and U.S. Patent No. 5,759,721 and European patent No. 1,029,258 are also appropriately chosen and are usable. Onium salts such as a sulfonium salt, an ammonium salt and a phosphonium salt, and a silanol-aluminum complex are usable as a thermal cation-polymerization initiator. Of these thermal cation-polymerisation initiators, if other essential components are stable even when heated at 150 °C or higher, a benzylsulfonium salt described in JP-A Nos. 58-37003 and 63-223002, a trialkylsulfonium salt described in JP-A No. 56-152833 and compounds described in JP-A Nos. 63-8365, 63-8366, 1-83060, 1-290658, 2-1470, 2-196812, 2-232253, 3-17101, 3-47164, 3-48654, 3-145459, 3-200761, 3-237107, 4-1177, 4-210673, 8-188569, 8-188570, 11-29609, 11-255739 and 2001-55374 are also usable as a thermal cation-polymerization initiator. These cationic-polymerization initiators can be use singly or in combination.

The foregoing initiator is used preferably in an amount of 0.01 to 30 parts by mass, and more preferably 0.05 to 20 parts by weight per 100 parts by weight of a cationic-polymerizable compound.

The thickness of the transparent organic layer according to the invention is preferably not less than 50 nm and not more than 5.0 $\mu$m and more preferably not less than 50 nm and not more than 2.0 $\mu$m for reduction the surface area, achievement of barrier capability and prevention of deformation of the substrate sheet.

When the combination of a transparent inorganic layer and a transparent organic layer forms one unit, there are provided preferably at least two units, more preferably from two to 10 units, and still more preferably from two to five units on a primer layer provided on the substrate sheet.

When plural units are provided and abrasion resistance is taken into account, it is preferred to render the outermost transparent organic layer more thicker than an inner transparent organic layer. In that case, the following relationship is preferably met:

$$1 < R2/R1 \leq 10$$

where R1 is a thickness of the inner transparent organic layer and R2 is a thickness of the outermost transparent organic layer. In the foregoing, the thickness of an transparent inorganic layer is preferably from 10 to 1,000 nm and more preferably from 20 to 500 nm and that of an inner organic layer is preferably from 50nm to 2.0 $\mu$m and more preferably from 50nm to 1.0 $\mu$m.

In addition to the essential layers described above, there may be provided an antistatic layer, an adhesive layer, a electrically conductive layer, an antihalation layer, an ultraviolet absorbing layer, a near-infrared absorbing layer, and the like. These layers are provided at a position according to the use thereof.

Preparation of transparent barrier sheet:

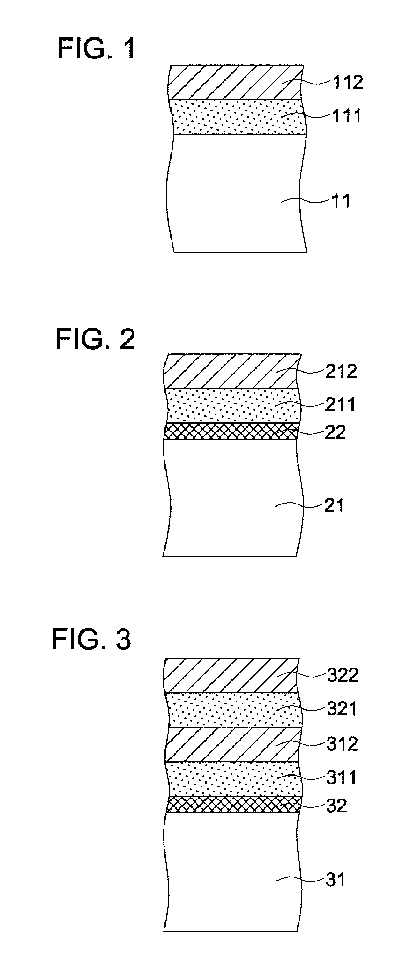

FIGS. 1-4 each illustrate a sectional view of a transparent barrier sheet of the invention, but the invention is not limited to these.

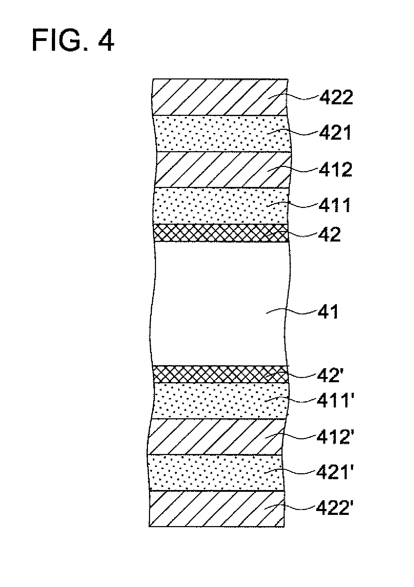

In FIG. 1, transparent inorganic layer 111 and transparent organic layer 112 are provided in that order on substrate sheet 11. In FIG. 2, primer layer 22, transparent inorganic layer 211 and transparent organic layer 212 are provided in that order on substrate sheet 21. In FIG. 3, primer layer 32, a unit of transparent inorganic layer 311 and transparent organic layer 312 are provided in that order on substrate sheet 31 and another unit of a transparent inorganic layer 321 and transparent organic layer 322 is further provided on the transparent organic layer 312. In Fig. 4, transparent primer layers 42 and 42' are provided on both sides of substrate sheet 41, and there are further provided two units of transparent inorganic layer 411 and transparent organic layer 412, and transparent inorganic layer 421 and transparent organic layer 422 on one side of the substrate sheet, and two units of a transparent inorganic layer 411' and a transparent organic layer 412', and a transparent inorganic layer 421' and a transparent organic layer 422' on the other side.

The afore-mentioned constituent of a primer layer are mixed or are dissolved or dispersed in a solvent to prepare a composition of a primer layer.

In the stage of preparing a coating solution, dispersion is conducted using conventional dispersing machines, such as a two-roll mill, a three-roll mill, a ball mill, a pebble mill, a cobol mill, a trone mill, a sand mill, a sand grinder, a Sqegvari atreiter, a high-speed impeller dispersing machine, a high-speed stone mill, a high-speed impact mill, a disper, a high-speed mixer, a homogenizer, a ultrasonic dispersing machine, an open kneader, and a continuous kneader.

Examples of solvents used for solution include water, ketones such as methyl ethyl ketone, methyl isobutyl ketone and cyclohexanone; alcohols such as ethyl alcohol, n-propyl alcohol, and isopropyl alcohol; aliphatic hydrocarbons such as heptane and cyclohexane; aromatic hydrocarbons such as toluene and xylene; glycols such ethylene glycol diethylene glycol; ether-alcohols such as ethylene glycol monomethyl ether; ethers such as tetrahydrofuran, 1,3-dioxoran and 1,4-dioxane; and halogen-containing solvents such as dichloromethane and chloroform.

The thus prepared composition of a transparent primer layer is coated by conventional methods such as a roll coating method, a direct gravure coating method, an air doctor coating method, a rod coating method, kiss-roll coating method, a squeeze coating method, a reverse roll coating method, a curtain flow coating method, a fountain method, a transfer coating method, a spray coating method, a dip coating method or other coating methods. Subsequently, heat-drying and optionally, an aging treatment are conducted to provide a transparent primer on a substrate sheet.

In one preferred embodiment of the invention, the transparent primer layer provided on the substrate sheet is controlled so as to exhibit a surface roughness Ra of not more than 5 nm for the purpose of prevention of defects caused when providing a transparent inorganic layer. To achieve such a surface roughness Ra, in cases when using an organic solvent in the composition to form a transparent primer layer, it is preferred that the coated layer surface is sufficiently leveled and drying is slowly carried out to remove the solvent. In cases of preparing a primer layer composition without a solvent, it is preferred that the formed layer is leveled so as to have a surface roughness Ra of not more than 5 nm and then subjected to curing or polymerization. Further, the primer layer surface can physically be reduced to a surface roughness Ra of 5 nm or less. For instanced, a mirror surface roll or a mirror surface plate which exhibits a surface roughness Ra of 5 nm or less is brought into contact with a primer layer provided on the substrate sheet and pressure or heat-pressure is applied thereto to reduced a surface roughness Ra to 5 nm or less.

Prior to coating a primer layer composition onto the substrate sheet, the substrate sheet is preferably subjected to at least one of a flame treatment, an ozone treatment, a glow discharge treatment, a corona discharge treatment, a plasma treatment, a vacuum ultraviolet treatment, an electron beam exposure treatment and a radiation exposure treatment, whereby enhancement of adhesion between the substrate sheet and the primer layer.

When using transparent primer layer constituents which are the same as constituents of a transparent organic layer, there may be employed methods used in the transparent organic layer.

Next, there will be described a method of forming a transparent inorganic layer which is provided on the substrate sheet or on the primer layer, and is mainly composed of a metal oxide or a metal nitride.

A transparent inorganic layer which is mainly composed of a metal oxide or a metal nitride can be provided by film formation through a vacuum vapor deposition method, a sputtering method, a ion plating method, a reaction type plasma vapor deposition, an electron cyclotron resonance plasma method, a plasma chemical gas phase growth method, a thermo-chemical gas phase growth method, a photochemical gas phase growth method, a catalytic chemical vapor deposition method or a vacuum ultraviolet chemical gas phase growth method. Of the foregoing methods, film formation is performed preferably by a catalytic chemical vapor deposition method (cat-CVD method), a reaction plasma deposition method (RPD method) or an electron cyclotron resonance (ECR) plasma deposition method, whereby the surface with reduced ruggedness and superior smoothness is achieved. Further, a RPD method or an ECR plasma method is more preferred, whereby smoothness of the formed surface is achieved.

The catalytic chemical vapor deposition method can be conducted by using methods or film forming apparatuses described in, for example, JP-A Nos. 2002-69644, 2002-69646, 2002-299259, 2004-211160, 2004-217966, 2004-292877, 2004-315899 and 2005-179693. The reaction type plasma vapor deposition method can also be conducted by using methods or film forming apparatuses described in, for example, JP-A Nos. 2001-262323, 2001-295031, 2001-348660, 2001-348662, 2002-30426, 2002-53950, 2002-60929, 2002-115049, 2002-180240, 2002-217131, 2002-249871, 2003-105526, 2004-76025 and 2005-34831. The ECR plasma method can also be conducted by using methods or film forming apparatuses described in, for example, T. Asamaki "Usumaku Sakusei no Kiso (Fundamentals of Layer Formation)" third ed., pages 152-154 and 226 (Nikkan Kogyo Shinbun, 1996 March), and JP-A Nos. 3-197682, 4-216628, 4-257224, 4-311036, 5-70955, 5-90247, 5-9742, 5-117867,5-129281, 5-171435, 6-244175, 6-280000, 7-263359, 7-335575, 8-78333, 9-17598, 2003-129236, 2003-303698, and 2005-307222.

A transparent organic layer can be provided on the foregoing transparent inorganic layer by coating methods used in formation of a transparent primer layer, as afore-mentioned or by vapor deposition methods, but in order to avoid damage to a transparent inorganic layer which functions as a barrier layer in the transparent barrier sheet of the invention, the vapor deposition method is preferably used.

A transparent organic layer can be provided by a vapor deposition method in such a manner that a monomer is deposited to form a monomer layer, which is sufficiently leveled and then polymerized to form a polymer layer. Specifically, a layer which contains at least one selected from radical-polymerizable compounds, cationic-polymerizable compounds, anionic-polymerizable compounds and compounds having a functional group capable of copolymerizing, and indispensable components necessary to polymerize the polymerizable compound, is formed by vapor deposition and after being smoothed by leveling, the surface is exposed to actinic rays such as an electron beam or ultraviolet rays, or is heated under conditions not causing deformation of the substrate sheet to allow polymerization of the polymerizable compound to form a thin polymeric layer.

Specifically, formation of a thin polymer layer with a radical-polymerizable compound on a transparent inorganic layer is performed in such a manner that a composition containing a radical-polymerizable compound is deposited onto transparent inorganic layer by a vapor deposition process and exposed to an electron beam to polymerize the radical-polymerizable compound to form a thin transparent organic layer. Alternatively, a composition containing a radical-polymerizable compound and a photopolymerization initiator capable of generating radicals upon exposure to ultrasonic rays is deposited onto a transparent inorganic layer and the deposited layer is exposed to light capable of allow the initiator to start polymerization, thereby polymerizing the radical-polymerizable compound to form a thin transparent organic layer.

Formation of a thin polymer layer with a cationic-polymerizable compound is performed in such a manner that a composition containing a cationic-polymerizable compound is deposited onto transparent inorganic layer and a photopolymerization initiator by a vapor deposition process and exposed to an actinic energy ray such as ultraviolet ray, visible light or near-infrared light capable of allow the initiator to start polymerization to polymerize the cationic-polymerizable compound to form a thin transparent organic layer. In the case of using a heat-polymerization initiator, polymerization is thermally initiated by a heat-polymerization initiator to perform polymerization of a cationic-polymerizable compound to form a thin transparent organic layer. In the case of continuous formation of a transparent inorganic layer and a transparent organic layer on a substrate sheet film or attaching importance to productivity, a composition including a cationic-polymerizable compound preferably contains a photopolymerization initiator.

When depositing a composition containing a radical-polymerizable compound or a cationic-polymerizable compound, deposition conditions may be separately set for each of the compounds. In cases where, polymerization does not proceed at the time of deposition or there is no problem even when deposition rates of monomers are different, deposition of a mixture may be feasible.

Specific methods of vapor deposition and apparatuses used therein are described in, for example, JP-A Nos. 5-125520, 6-316757, 7-26023, 9-104085, 9-272703, 9-31115, 10-92800, 10-168559, 10-289902, 11-172418, 2000-87224, 2000-122005, 2000-127186, 2000-216049, 2000-348971, 2003-3250, 2003-172935, 2003-233076, 2003-276115, 2003-300273, 2003-322859, 2003-335880, 2003-341003, 2004-1296, 2004-359899, 2004-103401, 2005-14483, 2005-125731, and 2005-178010; Japanese translation of PCT international patent application Nos. 8-503099, 8-512256, 11-503195, 2001-508089, 2001-518561, 2002-528568, 2004-524958, 2004-532330, 2004-533313, and 2005-524058. The method or apparatuses used in the invention can be chosen from those described above can also appropriately be modified so as to fit an object of the invention.

In order to prevent thermal deformation of a substrate sheet in the process of preparing the transparent barrier sheet of the invention, the maximum temperature (T) of the substrate sheet preferably falls within the range from 243 K to 383 K and more preferably from 243 K to 333 K. Further, the maximum temperature (T) preferably meets the following requirement (3):

$$0.46 \leq T/Tg \leq 0.98 \qquad\qquad (3)$$

where T is the maximum temperature of the substrate sheet and Tg is the glass transition temperature of a resin used in the substrate sheet.

When a roll of film is used as a substrate sheet in the preparation of a transparent barrier sheet, a transparent inorganic layer and a transparent organic layer is provided, while conveying the substrate sheet film with applying a tension between the winding and unwinding sides. In that case, thermal deformation of the substrate sheet is often greater than in a single sheet form so that it is preferable to satisfy the following expression (2), in which T represents the maximum temperature of a substrate sheet during preparation of a transparent barrier sheet and S represents a deposition time, which is the time (sec.) required to form a single layer of a transparent inorganic layer or a transparent organic layer through deposition. It is more preferable to satisfy the following expression (4), whereby transparent barrier sheets with fewer defects can be prepared. In cases when plural sets of a transparent inorganic layer and a transparent organic layer are provided, the requirement is satisfied by a single layer of a single layer of an inorganic layer or an organic layer. The deposition time represents the time for forming an inorganic layer or an organic layer at a certain point on the substrate sheet.

$$1.21 \leq (T \times S)/1000 \leq 460 \quad (K \cdot sec) \qquad (2)$$

$$1.21 \leq (TxS)/1000 \leq 350 \quad (K \cdot sec) \quad (4)$$

When a transparent primer layer, a transparent inorganic layer and a transparent organic layer are each provided, to enhance adhesion between layers, the layer surface may be subjected to a surface treatment selected from a flame treatment, an ozone treatment, a glow discharge treatment, a corona discharge treatment, a plasma treatment, a vacuum ultraviolet ray exposure treatment, an electron beam exposure treatment and a radiation exposure treatment.

In addition of the essential layer of the transparent barrier sheet of the invention, there may optionally be provided an antistatic layer, an adhesive layer, a conductive layer, an antihalation layer, an ultraviolet absorbing layer or a near-infrared absorbing layer. These layers can be provided similarly to the transparent primer layer, the transparent inorganic layer and the transparent organic layer.

## EXAMPLES

The transparent barrier sheet of the invention will be further described with reference to examples, but the invention is not limited to these. Unless otherwise noted, the unit "part(s)" represents part(s) by weight.

Example 1

A 100 $\mu$m thick polyether sulfone film (Sumilight FS-5300, produced by Sumitomo Bakelight Co., Ltd.) was prepared as a substrate sheet and one side of the sheet was subjected to a corona discharge treatment to prepare a substrate sheet. The substrate sheet was placed into a vacuum vessel and the inside of the vessel was evacuated, then, 1,4-butanediol glycidyl ether and 1,3-diaminopropane (produced by Tokyo Kasei) were each introduced as separate deposition sources and flash heating was started. After completing evaporation of impurities, a deposition shutter was opened to allow deposition and polymerization on the substrate sheet to form a transparent primer layer. The surface of the transparent primer layer was measured at five sites by using a noncontact 3D surface measurement apparatus (WYKO NT1100, produced by Veeco) and the surface roughness Ra was 4.5 nm. The thus prepared substrate sheet provided with a primer layer was subjected to a plasma treatment at a pressure of 1.0 Pa in an atmosphere of argon by using a plasma treatment apparatus to form a transparent primer later exhibiting a surface roughness Ra, as shown in Table 1.

The back surface of the thus prepared substrate sheet having a transparent primer layer was brought into contact with a 10 °C cooling plate. Using a reaction type plasma deposition system (produced by Sumitomo Juki, a compact plasma film-forming apparatus: 370x480 mm correspondence), vapor deposition was conducted using silicon as a solid target under conditions of a discharge current of 120 A and a pressure of 0.1 Pa in an atmosphere of argon: acid = 1:5 to form a 100 nm thick transparent inorganic layer comprised of a silicon oxide layer on the transparent primer layer. The deposition time and the maximum temperature (T) of the substrate sheet in the deposition process are shown in Table 1. The maximum temperature (T) was determined in such a manner that a thermo-label was attached to the layer surface and the temperature was confirmed after layer formation.

The substrate sheet having a transparent inorganic layer on the primer layer was introduced into a vacuum vessel, while the back surface of the substrate sheet was brought into contact with a 10 °C cooling plate. There was prepared a composition composed of 97 parts of bi-functional, neopentyl glycol-modified trimethylol propane diacrylate (Kayarad R-604, produced by Nippon Kayaku) and 3 parts of 2-methyl-[4-(methylthio)phenyl]-2-morpholino-1-propane-After evacuating the inside of the vessel to a level of $10^{-4}$ Pa, the foregoing composition was introduced in an organic deposition source. Resistance heating was started and when evaporation of impurities was completed, a deposition shutter was opened to allow deposition to form a transparent organic layer. Then the deposited layer was exposed to ultraviolet rays at an integrated exposure of 500 mJ/cm$^2$ to form a transparent organic layer. The inventive transparent barrier sheets 1-A to 1-E and the comparative transparent barrier sheets R-1A to R-1B were thus prepared.

The surface roughness Ra, thickness and deposition time of the obtained transparent organic layer and the maximum temperature (T) of the substrate sheet in the layer-forming process are shown in Table 1. The maximum temperature (T) was determined in such a manner that a thermo-label was attached to the layer surface and the temperature was confirmed after layer formation.

Evaluation of water vapor barrier capability

The prepared transparent barrier sheets were each measured in an atmosphere at a temperature of 40 °C and a humidity of 90% RH using a water vapor permeability measurement apparatus (OXTRAN 2/21, produced by MOCON Co.).

Evaluation results are shown in Table 1.

Evaluation of oxygen barrier capability

The transparent barrier sheets were measured with respect to oxygen permeability at 40 °C and 0% RH using an oxygen permeability measurement apparatus (PERMATRAN-W 3/32, produced by MOCON Co.). The results thereof are shown in Table 1.

Evaluation of curling resistance

The foregoing transparent barrier sheets were each cut to a size of 100x100 mm and placed with the layer-face upward. The maximum displacement at four corners was measured by a ruler to evaluate curling resistance.
Comparative transparent barrier sheets R-1A and R-1B, in which the surface roughness ratio of organic layer to primary layer fell outside of the range of the invention, were also prepared and evaluated similarly.
Evaluation results are shown in Table 1.

Table 1

| | | | Inv. | Inv. | Inv. | Inv. | Inv. | Comp. | Comp. |
|---|---|---|---|---|---|---|---|---|---|
| Barrier Sheet No. | | | 1-A | 1-B | 1-C | 1-D | 1-E | R-1A | R-1B |
| Substrate Sheet Tg (K) | | | 496 | 496 | 496 | 496 | 496 | 496 | 496 |
| Surface Roughness of Primer Layer Ra1 (nm) | | | 4.5 | 5.5 | 6.8 | 8.8 | 8.8 | 8.8 | 10.2 |
| Transparent Inorganic Layer | Thickness (nm) | | 100 | 100 | 100 | 100 | 100 | 100 | 100 |
| | Max. Temperature (K) | | 288 | 288 | 288 | 288 | 288 | 288 | 288 |
| | Deposition Time | S (sec) | 30 | 30 | 30 | 30 | 30 | 30 | 30 |
| | | TxS/1000 (K·sec) | 8.6 | 8.6 | 8.6 | 8.6 | 8.6 | 8.6 | 8.6 |
| Transparent Organic Layer | Thickness (nm) | | 100 | 100 | 100 | 100 | 300 | 500 | 100 |
| | Max. Temperature (K) | | 288 | 288 | 288 | 288 | 298 | 308 | 288 |
| | Deposition Time | S (sec) | 80 | 80 | 80 | 80 | 250 | 420 | 80 |
| | | TxS/1000 (K·sec) | 23.0 | 23.0 | 23.0 | 23 | 75 | 129 | 23 |
| Surface Roughness of Outermost Organic Layer Ra3 (nm) | | | 2.1 | 2.7 | 3.9 | 5.2 | 1.8 | 0.8 | 6.4 |
| Ratio of Surface Roughness Ra3x100/Ra1 | | | 46.7 | 49.1 | 57.4 | 59.1 | 20.5 | 9.1 | 62.7 |
| Gas Barrier | Water Vapor Permeability (g/m$^2$·24hr·40°C·90%) | | <0.01 | <0.01 | <0.01 | <0.01 | <0.01 | <0.01 | 0.02 |
| Capability | Oxygen Permeability (ml/m$^2$·24h·40°C·0%) | | <0.01 | <0.01 | 0.02 | 0.02 | 0.02 | 0.02 | 0.06 |
| Bending Resistance | Displacement | | 0.5 | 0.5 | 0.5 | 0.54 | 2.0 | 6.5 | 0.5 |

As is apparent from Table 1, it was proved that transparent barrier sheets of the invention exhibited superior barrier capability with respect to water vapor and oxygen gas and were also superior in curing resistance.

Example 2

One side of a 100 μm thick biaxially stretched polyethylene terephthalate film (Teonex Q65, produced by Teijin) was subjected to a corona discharge treatment to prepare a substrate sheet. Further thereon, a coating composition composed of 98 parts of di[1-ethyl(3-oxetanyl)]methyl ether and 2 parts of diphenyl-4-thiophenoxysulfonium hexafluoroantimonate as an initiator was coated at a coating thickness of 0.5 μm. Then, using an ultraviolet exposure apparatus (a conveyer-fitted UV curing apparatus, produced by Iwasaki Denki) the coated surface was exposed to ultraviolet rays in an atmosphere at a sufficient dose to react the composition and cured to form a transparent primer layer C. The surface of the transparent primer layer was measured at five sites within an area 200 μm x 200 μm by using a noncontact 3D surface measuring apparatus (WYKO NT1100, produced by Veeco). Average surface roughness Ra was determined to be 2.0 nm. The primer layer provided on the substrate sheet was subjected to a plasma treatment at a pressure of 1.0 Pa in an atmosphere of argon by using a plasma treatment apparatus to form a transparent primer later exhibiting a surface roughness Ra, as shown in Table 2.

Then, transparent barrier sheets of the invention, 2-A through 2-G and transparent barrier sheets for comparison, R-2A and R-2B were prepared in the form, as shown in Table 2 according to the manners 1) and 2) described below. In Table 2, "C" designates substrate sheet/primer layer.

1) Formation of inorganic layer A:

While the back surface of the substrate sheet was in contact with a cooling plate of 10 °C, a transparent inorganic layer comprised of silicon oxynitride was formed by ECR plasma deposition system (Aftec ER-1200, produced by N.T.T. ANTI Co., Ltd.) using silicon as a solid target under deposition conditions of a microwave power of 500 W, a RF power of 500 W and a deposition pressure of 0.09 Pa and under gas-introducing conditions of an argon flow rate of 40 sccm and a mixed gas (nitrogen/oxygen=8/2) flow rate of 0.5 sccm. The layer thickness of a transparent inorganic layer, the deposition time thereof and the maximum temperature (T °K) of the substrate sheet during deposition are each shown in Table 2. It was proved through X-ray photoelectron spectroscopy (XPS) that the thus obtained transparent inorganic layer exhibited a composition ratio of Si:O:N = 1.00:0.18:1.21. The maximum temperature (T, expressed in K) was determined similarly to Example 1.

2) Formation of organic layer B:

The substrate sheet was placed into a vacuum vessel while the back surface of the substrate sheet being in contact with a cooling plate of 10 °C and the inside of the vessel was evacuated to a level of $10^{-4}$ Pa. A mixture of 80 parts of 98 parts of di[1-ethyl(3-oxetanyl)]methyl ether and 2 parts of diphenyl-4-thiophenoxysulfonium hexafluoroantimonate as an initiator was prepared as a composition to form a transparent organic layer. This composition was introduced into an organic deposition source and resistance heating was started. When completing evaporation of impurities, a deposition shutter was opened to perform deposition to form an organic layer. Thereafter, the organic layer was exposed to ultraviolet rays at an integrated exposure of 500 mJ/$cm^2$ to form a transparent organic layer. The layer thickness of the transparent organic layer, the deposition time thereof and the maximum temperature (T °K) of the substrate sheet during deposition are each shown in Table 3. The maximum temperature (T, expressed in K) was determined similarly to Example 1.

The thus obtained transparent barrier sheets were each evaluated with respect to barrier capability and bending resistance similarly to Example 1. The obtained results are shown in Table 2.

Comparative transparent barrier sheets R-2A and R-2B in which the surface roughness ratio of organic layer to primary layer fell outside of the range of the invention was also prepared and similarly evaluated.

Table 2

| | | | Inv. | Inv. | Inv. | Inv. | Inv. | Inv. | Inv. | Comp. | Comp. |
|---|---|---|---|---|---|---|---|---|---|---|---|
| Barrier Sheet No. | | | 2-A | 2-B | 2-C | 2-D | 2-E | 2-F | 2-G | R-2A | R-2B |
| Substrate Sheet Tg (K) | | | 386 | 386 | 386 | 386 | 386 | 386 | 386 | 386 | 386 |
| Surface Roughness of Primer Layer Ra1 (nm) | | | 2.0 | 2.0 | 3.5 | 5.5 | 5.5 | 5.5 | 5.5 | 5.5 | 7.5 |
| Transparent Inorganic Layer | Thickness (nm) | | 60 | 60 | 60 | 60 | 60 | 60 | 60 | 60 | 60 |
| | Max. Temperature (K) | | 288 | 288 | 288 | 288 | 288 | 288 | 288 | 288 | 288 |
| | Deposition Time | S (sec) | 720 | 720 | 30 | 30 | 30 | 30 | 30 | 30 | 30 |
| | | TxS/1000 (K·sec) | 207 | 207 | 8.6 | 8.6 | 8.6 | 8.6 | 8.6 | 8.6 | 8.6 |
| Transparent Organic Layer | Thickness (nm) | | 60 | 60 | 60 | 60 | 80 | 80 | 100 | 200 | 60 |
| | Max. Temperature (K) | | 288 | 288 | 288 | 288 | 288 | 288 | 288 | 288 | 288 |
| | Deposition Time | S (sec) | 40 | 40 | 40 | 40 | 53 | 53 | 67 | 133 | 80 |
| | | TxS/1000 (K·sec) | 11.5 | 11.5 | 11.5 | 11.5 | 15.4 | 15.4 | 19.2 | 38.4 | 23 |
| Layer Structure | | | *1 | *2 | *1 | *1 | *1 | *3 | *1 | *1 | *1 |
| Surface Roughness of Outermost Organic Layer Ra3 (nm) | | | 0.9 | 0.3 | 1.9 | 3.3 | 2.5 | 1.1 | 1.3 | 0.5 | 4.9 |
| Ratio of Surface Roughness Ra3x100/Ra1 | | | 45.0 | 15.0 | 54.3 | 60.0 | 45.5 | 20.0 | 23.6 | 9.1 | 65.3 |
| Gas Barrier Capability | Water Vapor Permeability (g/m$^2$·24hr·40°C·90%) | | <0.01 | <0.01 | <0.01 | <0.01 | <0.01 | <0.01 | <0.01 | <0.01, | 0.03 |
| | Oxygen Permeability (ml/m$^2$·24hr·40°C·0%) | | 0.02 | <0.01 | 0.02 | 0.02 | 0.02 | <0.01 | 0.02 | 0.02 | 0.08 |
| Bending Resistance | Displacement | | 0.5 | 1.5 | 0.5 | 0.5 | 1.5 | 2 | 2 | 5.5 | 0.5 |
| *1: C/A/B, *2 : C/A/B/A/B/A/B, *3 : C/A/B/A/B | | | | | | | | | | | |

As is apparent from Table 2, it was proved that transparent barrier sheets of the invention exhibited superior barrier capability with respect to water vapor and oxygen gas and were also superior in curing resistance.

**Claims**

1.  A transparent barrier sheet comprising a substrate sheet having on at least one side of the substrate sheet a primer layer and further on the primer layer at least one transparent inorganic layer and at least one transparent organic layer in that order, wherein the following requirement (1) is satisfied:

$$10 \leq Ra3 \times 100/Ra1 < 60 \qquad\qquad (1)$$

wherein Ra1 is a surface roughness Ra of the primer layer and Ra3 is a surface roughness Ra of the transparent organic layer as an outermost layer.

2.  The transparent barrier sheet as claimed in claim 1, wherein the surface roughness Ra 1 of the primer layer is not more than 10 nm.

3.  The transparent barrier sheet as claimed in claim 1 or 2, wherein at least two of a unit comprising a transparent inorganic layer and a transparent organic layer are provided on the substrate and the barrier sheet satisfies the requirement (1).

4.  The transparent barrier sheet as claimed in any one of claims 1 to 3, wherein the transparent inorganic layer comprises a metal oxide or a metal nitride.

5.  The transparent barrier sheet as claimed in any one of claims 1 to 4, wherein the transparent organic layer comprises an organic layer formed by polymerization of an organic monomer.

6.  A method for producing a transparent barrier sheet as claimed in any one of claims 1 to 5, the method comprising forming a transparent inorganic layer and a transparent organic layer on a substrate sheet, wherein a maximum temperature of the substrate sheet falls within a range of 243 K to 383 K.

7.  The method as claimed in claim 6, wherein the requirement (2) is satisfied:

$$1.21 \leq (TxS)/1000 \leq 460 \qquad\qquad (2)$$

wherein T is a maximum temperature (K) of the substrate sheet in forming the transparent inorganic layer and the transparent organic layer and S is a time (sec) to form the inorganic compound or the organic compound.

8.  The method as claimed in claim 6 or 7, wherein the transparent organic layer is formed by vapor-depositing an organic monomer to form a monomer layer and subjecting the monomer layer to an actinic energy ray exposure or to a heat treatment to polymerize the monomer layer.

9.  The method as claimed in any one of claims 6 to 8, wherein the transparent inorganic layer is formed by depositing an inorganic compound by a process of at least one selected from catalytic chemical vapor deposition, reaction plasma deposition and electron cyclotron resonance plasma deposition.

FIG. 1

112
111
11

FIG. 2

212
211
22
21

FIG. 3

322
321
312
311
32
31

# FIG. 4

422
421
412
411
42
41
42'
411'
412'
421'
422'

<table>
<tr><td colspan="2">**INTERNATIONAL SEARCH REPORT**</td><td>International application No.<br>PCT/JP2007/054413</td></tr>
</table>

A.  CLASSIFICATION OF SUBJECT MATTER
*B32B9/00*(2006.01)i, *B65D65/40*(2006.01)i, *B65D81/24*(2006.01)i, *C23C14/06*(2006.01)i

According to International Patent Classification (IPC) or to both national classification and IPC

B.  FIELDS SEARCHED

Minimum documentation searched (classification system followed by classification symbols)
B32B1/00-43/00, B65D65/40, B65D81/24, C23C14/06

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2005-178137 A  (Dainippon Printing Co., Ltd.), 07 July, 2005 (07.07.05), Claims; Par. Nos. [0014], [0019], [0021], [0028], [0029], [0036] (Family: none) | 1-9 |
| Y | JP 2001-310412 A  (Mitsui Chemicals, Inc.), 06 November, 2001 (06.11.01), Par. Nos. [0012], [0029] (Family: none) | 1-9 |
| Y | JP 2003-231202 A  (Toppan Printing Co., Ltd.), 19 August, 2003 (19.08.03), Par. No. [0004] (Family: none) | 1-9 |

| ☒ | Further documents are listed in the continuation of Box C. | ☐ | See patent family annex. |

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    15 May, 2007 (15.05.07) | Date of mailing of the international search report<br>    29 May, 2007 (29.05.07) |
|---|---|
| Name and mailing address of the ISA/<br>    Japanese Patent Office | Authorized officer |
| Facsimile No. | Telephone No. |

Form PCT/ISA/210 (second sheet) (April 2005)

| INTERNATIONAL SEARCH REPORT | International application No. |
|---|---|
| | PCT/JP2007/054413 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-160836 A  (Mitsui Chemicals, Inc.),<br>10 June, 2004 (10.06.04),<br>Par. No. [0060]<br>(Family: none) | 6-9 |
| Y | JP 2005-342975 A  (Toppan Printing Co., Ltd.),<br>15 December, 2005 (15.12.05),<br>Par. No. [0014]<br>(Family: none) | 9 |
| Y | JP 2004-255706 A  (Teijin Dupont Film Kabushiki Kaisha),<br>16 September, 2004 (16.09.04),<br>Par. Nos. [0059] to [0061]<br>(Family: none) | 9 |

Form PCT/ISA/210 (continuation of second sheet) (April 2005)

# EP 2 000 300 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003276115 A
- JP 2003300273 A
- JP 2002025043 A
- JP 2003341003 A
- JP 2002050027 A
- JP 5212788 A
- JP 6335963 A
- JP 7044856 A
- JP 7272249 A
- JP 8212536 A
- JP 11181111 A
- JP 11286093 A
- JP 11314333 A
- JP 2000011364 A
- JP 2000219752 A
- JP 2001001460 A
- JP 2001243658 A
- JP 2002140811 A
- JP 2002160337 A
- JP 2002248726 A
- JP 2003300270 A
- JP 2004346373 A
- JP 2005324373 A
- JP 11216827 A
- JP 11322975 A
- JP 2001167426 A
- JP 2002018946 A
- JP 2003136656 A
- JP 2004042528 A
- JP 2004071117 A
- JP 2004142236 A
- JP 2004149551 A
- JP 2004174713 A
- JP 2005174508 A
- JP 4502479 A
- JP 9104085 A
- JP 2000122005 A
- JP 2000216049 A
- JP 2003017293 A
- JP 2003233076 A
- JP 2003322859 A
- JP 2004001296 A
- JP 2004359899 A
- JP 2004103401 A
- JP 8512256 A
- JP 11503195 A
- JP 2001508089 A
- JP 2001518561 A
- JP 2002528568 A
- JP 2004532330 A
- JP 2004533313 A
- JP 2005524058 A
- JP 5170763 A
- JP 5371224 A
- JP 6016804 A
- JP 7017958 A
- JP 7173279 A
- JP 8245783 A
- JP 8301859 A
- JP 10237056 A
- JP 10330485 A
- JP 11106380 A
- JP 11130766 A
- JP 11228558 A
- JP 11246510 A
- JP 11246540 A
- JP 11246541 A
- JP 11322735 A
- JP 2000001482 A
- JP 2000026546 A
- JP 2000191652 A
- JP 2000302774 A
- JP 2000336133 A
- JP 2001031664 A
- JP 2001031665 A
- JP 2001031666 A
- JP 2001040085 A
- JP 2003081958 A
- JP 2003089693 A
- JP 2001163882 A
- JP 2001226365 A
- JP 2001278874 A
- JP 2001278875 A
- JP 2001302651 A
- JP 2001342194 A
- JP 2002020376 A
- JP 2002080581 A
- JP 2002193965 A
- JP 2002241489 A
- JP 2002275171 A
- JP 2002275172 A
- JP 2002322268 A
- JP 2003002881 A
- JP 2003012662 A
- JP 2004091347 A
- JP 2004149486 A
- JP 2004262817 A

- JP 2005125731 A
- JP 2005171122 A
- JP 2005238446 A
- JP 2005239573 A
- JP 2005336349 A
- JP 11500422 PCT
- JP 2004341016 A
- JP 2306247 A
- JP 62057646 A
- JP 5107999 A
- JP 5181271 A
- JP 8016080 A
- JP 8305262 A
- JP 2000047552 A
- JP 2003066816 A
- US 5759721 A
- EP 1029258 A
- JP 58037003 A
- JP 63223002 A
- JP 56152833 A
- JP 63008365 A
- JP 63008366 A
- JP 1083060 A
- JP 1290658 A
- JP 2001470 A
- JP 2196812 A
- JP 2232253 A
- JP 3017101 A
- JP 3047164 A
- JP 3048654 A
- JP 3145459 A
- JP 3200761 A
- JP 3237107 A
- JP 4001177 A
- JP 4210673 A
- JP 8188569 A
- JP 8188570 A
- JP 11029609 A
- JP 11255739 A
- JP 2001055374 A
- JP 2002069644 A
- JP 2002069646 A
- JP 2002299259 A
- JP 2004211160 A
- JP 2004217966 A
- JP 2004292877 A
- JP 2004315899 A
- JP 2005179693 A
- JP 2001262323 A
- JP 2001295031 A
- JP 2001348660 A
- JP 2001348662 A
- JP 2002030426 A
- JP 2002053950 A

- JP 2002060929 A
- JP 2002115049 A
- JP 2002180240 A
- JP 2002217131 A
- JP 2002249871 A
- JP 2003105526 A
- JP 2004076025 A
- JP 2005034831 A
- JP 3197682 A
- JP 4216628 A
- JP 4257224 A
- JP 4311036 A
- JP 5070955 A
- JP 5090247 A
- JP 5009742 A
- JP 5117867 A
- JP 5129281 A
- JP 5171435 A
- JP 6244175 A
- JP 6280000 A
- JP 7263359 A
- JP 7335575 A
- JP 8078333 A
- JP 9017598 A
- JP 2003129236 A
- JP 2003303698 A
- JP 2005307222 A
- JP 5125520 A
- JP 6316757 A
- JP 7026023 A
- JP 9272703 A
- JP 9031115 A
- JP 10092800 A
- JP 10168559 A
- JP 10289902 A
- JP 11172418 A
- JP 2000087224 A
- JP 2000127186 A
- JP 2000348971 A
- JP 2003003250 A
- JP 2003172935 A
- JP 2003335880 A
- JP 2005014483 A
- JP 2005178010 A
- JP 8503099 PCT
- JP 8512256 PCT
- JP 11503195 PCT
- JP 2001508089 PCT
- JP 2001518561 PCT
- JP 2002528568 PCT
- JP 2004524958 PCT
- JP 2004532330 PCT
- JP 2004533313 PCT
- JP 2005524058 PCT

**Non-patent literature cited in the description**

- *11290 chemical goods,* 778-787
- Organic Material used for Imaging. Organic Electronics Material Study Group. Bunshin Shuppan, 1993, 187-192
- Usumaku Sakusei no Kiso. **T. ASAMAKI.** Fundamentals of Layer Formation. Nikkan Kogyo Shinbun, March 1996, 152-154226